(19) Europäisches Patentamt
European Patent Office
Office européen des brevets

(11) **EP 4 421 454 B1**

(12) **EUROPÄISCHE PATENTSCHRIFT**

(45) Veröffentlichungstag und Bekanntmachung des Hinweises auf die Patenterteilung:
**30.04.2025 Patentblatt 2025/18**

(21) Anmeldenummer: **23158098.6**

(22) Anmeldetag: **23.02.2023**

(51) Internationale Patentklassifikation (IPC):
**G01D 5/244** *(2006.01)* **G01D 5/20** *(2006.01)*

(52) Gemeinsame Patentklassifikation (CPC):
**G01D 5/2053; G01D 5/24442;** G01D 2205/77

(54) **SKALENELEMENT FÜR EINE INDUKTIVE POSITIONSMESSEINRICHTUNG**

SCALE ELEMENT FOR AN INDUCTIVE POSITION MEASURING DEVICE

ÉLÉMENT D'ÉCHELLE POUR UN DISPOSITIF INDUCTIF DE MESURE DE POSITION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**28.08.2024 Patentblatt 2024/35**

(73) Patentinhaber: **Dr. Johannes Heidenhain GmbH
83301 Traunreut (DE)**

(72) Erfinder:
• HEUMANN, Martin
  83278 Traunstein (DE)
• HEINEMANN, Christoph
  83236 Übersee (DE)

(56) Entgegenhaltungen:
DE-A1- 102018 213 400    DE-A1- 102019 214 219

# EP 4 421 454 B1

**Beschreibung**

## GEBIET DER TECHNIK

Die Erfindung betrifft ein Skalenelement für eine induktive Positionsmesseinrichtung gemäß dem Anspruch 1 zur Bestimmung einer Winkellage oder einer Linearposition des Skalenelements relativ zu einem Abtastelement.

Induktive Positionsmesseinrichtungen werden beispielsweise als Winkelmesseinrichtungen zur Bestimmung einer Winkelposition von relativ zueinander drehbaren Maschinenteilen verwendet. Bei induktiven Positionsmesseinrichtungen sind häufig Erregerspuren und Empfängerspuren etwa in Form von Leiterbahnen auf einer gemeinsamen meist mehrlagigen Leiterplatte aufgebracht, die beispielsweise mit einem Stator der Positionsmesseinrichtung fest verbunden ist. Dieser Leiterplatte gegenüber befindet sich ein Skalenelement, auf dem Teilungsstrukturen aufgebracht sind, und welches mit einem beweglichen Teil der Positionsmesseinrichtung fest verbunden ist. Wenn an den Erregerspuren ein zeitlich wechselnder elektrischer Erregerstrom angelegt wird, werden in den Empfängerspuren während der Relativbewegung zwischen dem Skalenelement und dem Abtastelement von der Position abhängige Signale erzeugt. Diese Signale werden dann in einer Auswerteelektronik weiterverarbeitet.

## STAND DER TECHNIK

Aus der EP 3 929 539 A1 der Anmelderin ist ein Skalenelement für eine induktive Winkelmesseinrichtung bekannt. Das Skalenelement umfasst zwei Teilungsspuren, die jeweils aus einer periodischen Abfolge von alternierend angeordneten elektrisch leitfähigen Teilungsbereichen und nichtleitfähigen Teilungsbereichen bestehen. Befestigt wird das Skalenelement mit Hilfe von Befestigungsbohrungen. Ein weiteres bekanntes Skalenelement ist aus der DE 10 2018 213400 A1 bekannt.

## ZUSAMMENFASSUNG DER ERFINDUNG

Der Erfindung liegt die Aufgabe zugrunde ein kompaktes und kostengünstig herstellbares Skalenelement zu schaffen, das dennoch für eine vergleichsweise genau arbeitende induktive Positionsmesseinrichtung verwendbar ist. Diese Aufgabe wird erfindungsgemäß durch die Merkmale des Anspruches 1 gelöst.

Das Skalenelement, welches für eine induktive Positionsmesseinrichtung geeignet und bestimmt ist, umfasst ein Substrat, auf dem eine Teilungsspur angeordnet ist. Die Teilungsspur ist entlang einer Messrichtung aus einer periodischen Abfolge von alternierend angeordneten elektrisch leitfähigen Teilungsbereichen und vergleichsweise nichtleitfähigen Teilungsbereichen gebildet, wobei die elektrisch leitfähigen Teilungsbereiche jeweils aus einer Schicht aus elektrisch leitfähigem Material gebildet sind. Weiterhin ist im Substrat zumindest eine Bohrung angeordnet und vorgesehen, die dazu geeignet ist das Skalenelement an einem Maschinenteil zu befestigen. Die elektrisch leitfähigen Teilungsbereiche weisen jeweils eine Öffnung auf, wobei das elektrisch leitfähige Material die Öffnung umschließt: Zudem ist zumindest in einem der elektrisch leitfähigen Teilungsbereiche durch die Öffnung hindurch die Bohrung im Substrat angeordnet.

Die elektrisch leitfähigen Teilungsbereiche sind also aus einer Schicht aus elektrisch leitfähigem Material gebildet. Die vergleichsweise nichtleitfähigen Teilungsbereiche können etwa aus Kunststoff (z. B. aus Leiterplattenmaterial) gebildet sein. Das Skalenelement kann als Substrat vorzugsweise Leiterplattenmaterial aus Kunststoff aufweisen. Alternativ kann das Substrat aus einem Schichtkörper gebildet sein, welcher eine relativ dicke Stahlschicht und eine nichtleitende Schicht (z.B. Kunststoffschicht) umfasst, wobei die Stahlschicht auf der von den Teilungsbereichen abgewandten Seite des Skalenelements angeordnet ist. Der oben genannte Begriff "vergleichsweise nichtleitfähig" bezieht sich also auf das Verhältnis der elektrischen Leitfähigkeiten der Materialien der alternierend angeordneten Teilungsbereiche. Dieses Verhältnis kann insbesondere größer als 10 oder größer als 50 sein. Die Schicht aus elektrisch leitfähigem Material der elektrisch leitfähigen Teilungsbereiche ist mit Vorteil größer als 12 $\mu$m beziehungsweise 0,012 mm. Andererseits ist es insbesondere aus wirtschaftlichen Gründen von Vorteil, wenn die Schicht dünner als 1 mm, insbesondere dünner als 0,5 mm, vorteilhafterweise dünner als 0,1 mm ist.

Unter dem Begriff Bohrung ist im Folgenden ein Loch zu verstehen, das nicht zwingend rund ausgestaltet sein muss. Insbesondere kann die Bohrung hier auch eckig oder elliptisch ausgestaltet sein und beispielsweise durch einen Stanz- oder Fräsprozess hergestellt worden sein.

Das Skalenelement dient in einer Winkelmesseinrichtung dazu, dass eine Winkelstellung relativ zu einem Abtastelement bestimmt werden kann. Dabei ist das Skalenelement relativ zum Abtastelement um eine Achse drehbar angeordnet, so dass die Messrichtung die Umfangsrichtung bezogen auf die Achse darstellt.

Mit Vorteil ist die Teilungsspur ringförmig beziehungsweise kreisringförmig ausgebildet, wobei insbesondere der Mittelpunkt der ringförmigen Teilungsspur auf der Achse liegt.

In weiterer Ausgestaltung der Erfindung sind die Öffnungen in den elektrisch leitfähigen Teilungsbereichen geometrisch gleich ausgestaltet.

Vorteilhafterweise erstreckt sich die Teilungsspur entlang einer Teilungskreislinie mit dem Mittelpunkt, der insbesondere auf der Achse liegt, wobei die Öffnungen so angeordnet sind, dass diese jeweils den gleichen Abstand zum Mittelpunkt aufweisen und entlang der Teilungskreislinie äquidistant angeordnet sind.

Mit Vorteil umfasst das Skalenelement mehrere elektrisch leitfähige Teilungsbereiche, welche Bohrungen aufweisen. Die Bohrungen sind so angeordnet, dass diese jeweils den gleichen Abstand zum Mittelpunkt aufweisen und entlang der Teilungskreislinie äquidistant angeordnet sind.

Die Abstände zwischen den Öffnungen beziehungsweise zwischen den Bohrungen werden hier in Grad angegeben und beziehen sich auf einen jeweiligen Zentriwinkel um die Achse beziehungsweise um den Mittelpunkt der Teilungskreislinie.

Vorteilhafterweise weist das ringförmig ausgestaltete Skalenelement einen Innendurchmesser d und einen Außendurchmesser D auf, wobei gilt D/d < 3. Demnach weist also das Skalenelement beispielsweise einen relativ großen Innendurchmesser d auf.

In weiterer Ausgestaltung der Erfindung umfasst das Skalenelement zumindest ein Befestigungselement, das in der Bohrung angeordnet ist. Dabei kann das Befestigungselement bezogen auf die axiale Richtung bündig oder zurückgesetzt bezüglich der elektrisch leitfähigen Teilungsbereiche angeordnet sein und jedenfalls nicht in axialer Richtung über die Oberfläche der elektrisch leitfähigen Teilungsbereiche ragen. Unter axialer Richtung ist im Folgenden eine Richtung zu verstehen, die parallel zur Achse orientiert ist.

Insbesondere ist das Befestigungselement aus elektrisch leitfähigem Material hergestellt und kann als eine Schraube ausgestaltet sein. Alternativ kann als Befestigungselement ein Niet, ein Metallstift, ein Spannstift oder dergleichen dienen, wobei es vorteilhaft sein kann, wenn das Skalenelement zusätzlich noch an dem Maschinenteil, an dem es befestigt wird, verklebt wird. Das Befestigungselement kann insbesondere zur Herstellung eines Formschlusses dienen, was für eine funktional sichere Anordnung von Bedeutung ist. Gleichzeitig kann das Befestigungselement zur Zentrierung des Skalenelements dienen. So ist beispielsweise auch eine Konfiguration möglich, bei der in die Bohrungen Zentriernasen beziehungsweise Zentrierschneiden gepresst werden und das Skalenelement zusätzlich mit einer Klebeverbindung fixiert wird.

Mit Vorteil umfasst das Skalenelement mehrere Befestigungselemente, wobei das Skalenelement mehrere der elektrisch leitfähigen Teilungsbereiche umfasst, welche Bohrungen aufweisen, in denen die Befestigungselemente angeordnet sind.

Gemäß einem weiteren Aspekt umfasst die Erfindung auch eine induktive Positionsmesseinrichtung mit dem Skalenelement und mit einem Abtastelement.

Vorteilhafte Ausbildungen der Erfindung entnimmt man den abhängigen Ansprüchen.

Weitere Einzelheiten und Vorteile des erfindungsgemäßen Abtastelements ergeben sich aus der nachfolgenden Beschreibung eines Ausführungsbeispiels anhand der beiliegenden Figuren.

## KURZE BESCHREIBUNG DER ZEICHNUNGEN

Figur 1  eine perspektivische Ansicht einer Winkelmesseinrichtung umfassend ein Abtastelement und ein Skalenelement,

Figur 2  eine Draufsicht auf eine Seite des Abtastelements,

Figur 3  eine Draufsicht auf das Skalenelement, bei der unter anderem mehrere Empfängerleiterbahnen ausgeblendet sind,

Figur 4  eine Draufsicht auf eine Seite eines Skalenelements

Figur 5  eine perspektivische Schnittdarstellung des Skalenelements

Figur 6  eine Schnittdarstellung durch eine Bohrung des Skalenelements.

## BESCHREIBUNG DER AUSFÜHRUNGSFORMEN

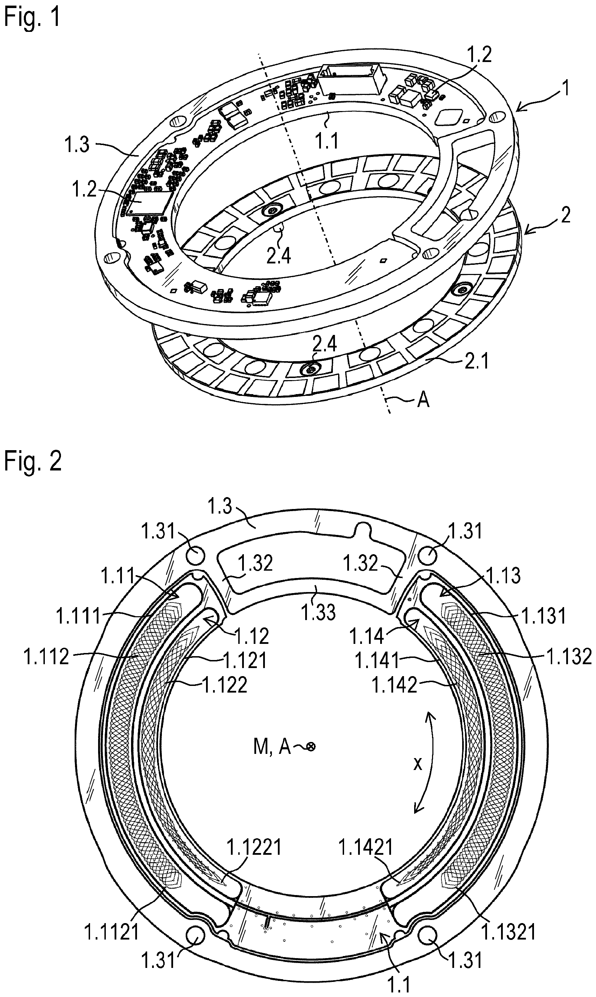

Die Erfindung wird gemäß der Figur 1 anhand einer Winkelmesseinrichtung beschrieben, welche ein Abtastelement 1 aufweist, das zur Erfassung einer Winkelstellung eines Skalenelements 2 verwendet werden kann. Das Skalenelement 2 ist um eine Achse A relativ zum Abtastelement 1 drehbar angeordnet. Eine derartige Winkelmesseinrichtung kann beispielsweise in einer Antriebseinrichtung verwendet werden, wobei das Skalenelement 2 dann etwa mit einer Antriebswelle eines Motors drehfest verbunden wird.

Das Abtastelement 1 umfasst eine Leiterplatte 1.1, welche mehrere Lagen aufweist, sowie elektronische Bauteile 1.2, die auf der Leiterplatte 1.1 montiert sind. Die Leiterplatte 1.1 umfasst zudem einen Rahmen 1.3 als mechanisch tragende Struktur.

Wie auch in der Figur 2 gezeigt, hat die Leiterplatte 1.1 die Form eines Kreisringsegments, das ca. über 300° umlaufend ausgestaltet ist und entsprechend eine Öffnung aufweist. Um diese Leiterplatte 1.1 außen herum angeordnet ist der geschlossene und im wesentlichen ringförmige Rahmen 1.3, hier aus Metall, befestigt, der insbesondere zur mechanischen Verstärkung des Abtastelements 1 dient und Befestigungsbereiche 1.31, hier in Form von Bohrungen, aufweist. Im Bereich der Öffnung der Leiterplatte 1.1 verlaufen parallel zu den Stirnseiten der Leiterplatte 1.1 im Wesentlichen in radialer Richtung Stege 1.32 des Rahmens 1.3. Ein weiterer Steg 1.33 des Rahmens 1.3 verläuft über einen Winkel von etwa 60° in einer Kreissegmentkontur.

Das Abtastelement 1 dient zur Abtastung des ersten Skalenelements 2. Im vorgestellten Ausführungsbeispiel sind die elektronischen Bauteile 1.2 nur auf einer Seite der Leiterplatte 1.1 montiert, nämlich auf der vom Skalenelement 2 abgewandten Seite. Alternativ oder ergänzend könnten aber auch beide Seiten der Leiterplatte 1.1 mit elektronischen Bauteilen 1.2 bestückt werden.

Zur Bestimmung der Winkelinformationen weist gemäß der Figur 2 die Leiterplatte 1.1 eine erste Detektoreinheit 1.11, und eine zweite Detektoreinheit 1.12, eine dritte Detektoreinheit 1.13 und eine vierte Detektoreinheit 1.14 auf. Die Detektoreinheiten 1.11 bis 1.14 haben jeweils eine ringsegmentartige Form, wobei für alle Detektoreinheiten 1.11 bis 1.14 gilt, dass der Mittelpunkt M der jeweiligen ringsegmentartigen Form auf der Achse A liegt. Demnach liegen die Detektoreinheiten 1.11 bis 1.14 bezüglich des Mittelpunkts M in erster Näherung konzentrisch einander gegenüber.

Die erste Detektoreinheit 1.11 umfasst eine erste Erregerspur 1.111 und eine erste Empfängerspur 1.112. Ebenso umfassen die zweite Detektoreinheit 1.12 eine zweite Erregerspur 1.121 und eine zweite Empfängerspur 1.122, die dritte Detektoreinheit 1.13 eine dritte Erregerspur 1.131 und eine dritte Empfängerspur 1.132 sowie die vierte Detektoreinheit 1.14 eine vierte Erregerspur 1.141 und eine vierte Empfängerspur 1.142.

Die Erregerspuren 1.111, 1.121, 1.131, 1.141 umschließen jeweils eine der Empfängerspuren 1.112, 1.122, 1.132, 1.142. Sowohl die Erregerspuren 1.111, 1.121, 1.131, 1.141, als auch die Empfängerspuren 1.112, 1.122, 1.132, 1.142 verlaufen entlang einer Umfangsrichtung x.

Jede der Empfängerspuren 1.112, 1.122, 1.132, 1.142 umfasst im vorgestellten Ausführungsbeispiel jeweils vier Empfängerleiterbahnen 1.1121, 1.1221, 1.1321, 1.1421, die in Umfangsrichtung x versetzt angeordnet sind, so dass diese dem Versatz entsprechend vier phasenverschobene Signale liefern können. Im vorgestellten Ausführungsbeispiel sind innerhalb einer Empfängerspur 1.112, 1.122, 1.132, 1.142 benachbarte Empfängerleiterbahnen 1.1121, 1.1221, 1.1321, 1.1421 um 1/8 der vollen Sinusperiode (um $\pi/4$ oder 45° entlang der Umfangsrichtung x) zueinander versetzt angeordnet.

In den Figuren sind diejenigen Empfängerleiterbahnen 1.1121, 1.1221, 1.1321, 1.1421, welche ein und derselben Empfängerspur 1.112, 1.122, 1.132, 1.142 angehören, mit nur einem Bezugszeichen versehen. Folglich sind also beispielsweise alle Empfängerleiterbahnen 1.1121 der ersten Empfängerspur 1.112 mit nur einem Bezugszeichen versehen. Zudem verlaufen die ersten Empfängerleiterbahnen 1.1121, 1.1221, 1.1321, 1.1421 der Detektoreinheiten 1.11 bis 1.14 mit Vias verbunden in unterschiedlichen Lagen der Leiterplatte 1.1, so dass an Kreuzungspunkten unerwünschte Kurzschlüsse vermieden werden. Wenngleich genau genommen jede der Empfängerleiterbahnen 1.1121, 1.1221, 1.1321, 1.1421 aus vielen Leiterstücken besteht, die jeweils auf zwei Ebenen beziehungsweise Lagen verteilt und aneinandergereiht sind, wird im Folgenden eine derartige Struktur zusammenfassend als eine Empfängerleiterbahn 1.1121, 1.1221, 1.1321, 1.1421 bezeichnet.

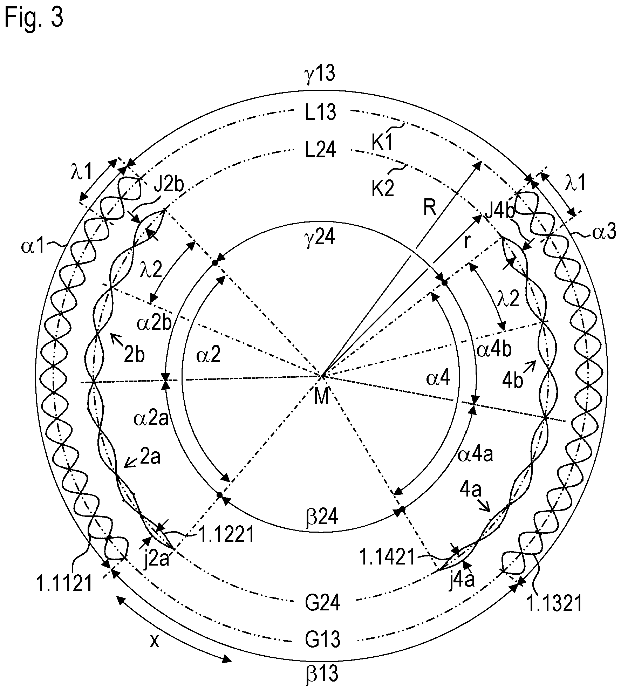

In der Figur 3 ist der Übersichtlichkeit halber jeweils nur eine Empfängerleiterbahn 1.1121, 1.1221, 1.1321, 1.1421 der Empfängerspuren 1.112, 1.122, 1.132, 1.142 gezeigt. Die Folgenden Erläuterungen werden anhand dieser Darstellung einer einzelnen Empfängerleiterbahn 1.1121, 1.1221, 1.1321, 1.1421 vorgenommen, wobei die Gegebenheiten auch für die entsprechend zueinander gehörigen phasenverschobenen Empfängerleiterbahnen 1.1121, 1.1221, 1.1321, 1.1421 zutreffen.

Die erste Empfängerleiterbahn 1.1121 und die dritte Empfängerleiterbahn 1.1321 verlaufen entlang einer ersten Kreislinie K1, die einen ersten Radius R aufweist. Die zweite Empfängerleiterbahn 1.1221 und die vierte Empfängerleiterbahn 1.1421 verlaufen entlang einer zweiten Kreislinie K2, die einen zweiten Radius r aufweist, wobei der zweite Radius r kleiner ist als der erste Radius R, so dass gilt:

$$r < R$$

Beide Kreislinien K1, K2 haben denselben Mittelpunkt M. Die Empfängerleiterbahnen 1.1121, 1.1221, 1.1321, 1.1421 weisen einen räumlich periodischen Verlauf auf, der im Wesentlichen sinusförmig beziehungsweise sinusartig ausgestaltet ist. Die ersten Empfängerleiterbahnen 1.1121 der ersten Empfängerspur 1.112 und die dritten Empfängerleiterbahnen 1.1321 der dritten Empfängerspur 1.132 weisen über ihren Verlauf hinweg eine konstante erste Periodenlänge $\lambda$1 auf. Dagegen weisen die zweiten Empfängerleiterbahnen 1.1221 der zweiten Empfängerspur 1.122 und die vierten Empfängerleiterbahnen 1.1421 der vierten Empfängerspur 1.142 über ihren Verlauf hinweg eine konstante zweite Periodenlänge $\lambda$2 auf. Hier ist die zweite Periodenlänge $\lambda$2 größer als die erste Periodenlänge $\lambda$1.

$$\lambda2 > \lambda1$$

Die Periodenlängen $\lambda$1, $\lambda$2 werden hier in Grad angegeben und beziehen sich auf einen jeweiligen Zentriwinkel um die Achse A beziehungsweise um den Mittelpunkt M. Im vorgestellten Ausführungsbeispiel beträgt

die erste Periodenlänge: $\lambda1 = 360°/32 = 11{,}25°$ und
die zweite Periodenlänge: $\lambda2 = 360°/15 = 24°$.

Demzufolge ist also die erste Periodenlänge $\lambda$1 ein ganzzahliger erster Teiler S von 360°, wobei hier gilt S = 32, $S \in \mathbb{N}$.

Analog ist die zweite Periodenlänge $\lambda$2 ein ganzzahliger zweiter Teiler T von 360°, wobei hier gilt T = 15, $T \in \mathbb{N}$.

Der erste Teiler S und der zweite Teiler T sind teilerfremd:

$$S \perp T$$

Die zweiten Empfängerleiterbahnen 1.1221 und die vierten Empfängerleiterbahnen 1.1421 sind so angeordnet, dass zwischen diesen in Umfangsrichtung x jeweils eine erste Lücke G24 und eine zweite Lücke L24 vorliegt, wobei sich die zweiten Empfängerleiterbahnen 1.1221 über eine zweite Bogenlänge $\alpha$2 erstrecken und die vierten Empfängerleiterbahnen 1.1421 über eine vierte Bogenlänge $\alpha$4 erstrecken, dabei gilt im vorgestellten Ausführungsbeispiel:

$$\alpha2 = p \cdot \lambda2$$

$$\alpha4 = q \cdot \lambda2$$

$$\alpha2 = \alpha4,\ da\ p = q$$

$$mit\ p,\ q \in \mathbb{N}$$

Hier ist p = q = 4, demnach beträgt $\alpha2 = 4 \times 24° = 96° = \alpha4$. Folglich erstrecken sich die zweiten Empfängerleiterbahnen 1.1221 und die die vierten Empfängerleiterbahnen 1.1421 also jeweils über eine gleich große Bogenlänge $\alpha$2, $\alpha$4, die hier vier zweiten Periodenlängen $\lambda$2 entspricht.

Die erste Lücke G24 erstreckt sich über eine erste Lückenlänge $\beta$24 und die zweite Lücke L24 erstreckt sich über eine zweite Lückenlänge $\gamma$24. Die erste Lückenlänge $\beta$24 beträgt ein erstes Vielfaches m der zweiten Periodenlänge $\lambda$2, wobei hier m = 3 gilt. Zudem beträgt die zweite Lückenlänge $\gamma$24 ein zweites Vielfaches n, im vorgestellten Ausführungsbeispiel nimmt n den Wert 4 an. Grundsätzlich können für m und n Natürliche Zahlen größer Null eingesetzt werden. Es gilt:

$$\beta24 = m \cdot \lambda2$$

$$\gamma24 = n \cdot \lambda2$$

$$m \neq n,$$

$$mit\ m,\ n \in \mathbb{N}$$

Außerdem gilt, dass die Summe aus m und n eine ungerade Zahl ergibt, also

$$m + n = 2 \cdot k + 1,$$

$$\text{mit } k \in \mathbb{N}$$

Im Hinblick auf die Bildung eines absoluten Winkelmesswertes, insbesondere zur Bildung eines Anschlusses beziehungsweise auf eine Verknüpfung mit der ersten und dritten Empfängerspur 1.112, 1.132, ist es grundsätzlich vorteilhaft, wenn die Summe aus der zweiten Bogenlänge $\alpha2$, der vierten Bogenlänge $\alpha4$, der ersten Lückenlänge $\beta24$ und der zweiten Lückenlänge $\gamma24$ ein ungeradzahliges Vielfaches der zweiten Periodenlänge $\lambda2$ beträgt, beziehungsweise der zweite Teiler T (hier 15) eine ungerade Zahl ist.

$$\alpha2 + \alpha4 + \beta24 + \gamma24 = (2 \cdot k + 1) \cdot \lambda2$$

oder

$$p + q + m + n = 2 \cdot k + 1, \text{ hier}$$

$$4 + 4 + 4 + 3 = 15 \ (= 2 \cdot 7 + 1)$$

Es ist vorteilhaft, wenn sich die zweiten Empfängerleiterbahnen 1.1221 und die vierten Empfängerleiterbahnen 1.1421 jeweils über eine gleich große Bogenlänge $\alpha2$, $\alpha4$ erstrecken (p = q). Folglich müssen die erste Lückenlänge $\beta24$ und die zweite Lückenlänge $\gamma24$ unterschiedlich groß sein, sofern die Bogenlängen $\alpha2$, $\alpha4$ und die Lückenlängen $\beta24$, $\gamma24$ jeweils ein Vielfaches der zweiten Periodenlänge $\lambda2$ betragen und deren Summe ein ungeradzahliges Vielfaches der zweiten Periodenlänge $\lambda2$ ist. Im vorgestellten Ausführungsbeispiel ist die erste Lückenlänge $\beta24$ kleiner als die zweite Lückenlänge $\gamma24$, so dass gilt:

$$\beta24 < \gamma24$$

oder

$$m < n$$

Vorteilhafterweise ist der Unterschied zwischen der ersten Lückenlänge $\beta24$ und der zweiten Lückenlänge $\gamma24$ minimal, so dass gilt:

$$n - m = 1,$$

oder

$$\gamma24 - \beta24 = \lambda2$$

Die ersten Empfängerleiterbahnen 1.1121 und die dritten Empfängerleiterbahnen 1.1321 sind so angeordnet, dass zwischen diesen in Umfangsrichtung x eine dritte Lücke G13 und eine vierte Lücke L13 vorliegt. Zudem erstrecken sich die ersten Empfängerleiterbahnen 1.1121 über eine erste Bogenlänge $\alpha1$, wobei gilt:

$$\alpha1 = s \cdot \lambda1$$

Die dritten Empfängerleiterbahnen 1.1321 erstrecken sich jeweils über eine dritte Bogenlänge $\alpha3$, wobei gilt:

$$\alpha3 = t \cdot \lambda1$$

$$s = t$$

$$\text{mit } s, t \in \mathbb{N}$$

Im vorgestellten Ausführungsbeispiel ist s = t = 8, so dass also $\alpha1 = 8 \times 11{,}25° = 90° = \alpha3$ beträgt. Die ersten Empfängerleiterbahnen 1.1121 und die dritten Empfängerleiterbahnen 1.1321 erstrecken sich also jeweils über eine gleich große Bogenlänge $\alpha1$, $\alpha3$, die hier acht ersten Periodenlängen $\lambda1$ entspricht.

Die dritte Lücke G13 erstreckt sich über eine dritte Lückenlänge $\beta13$ und die vierte Lücke L13 erstreckt sich über eine vierte Lückenlänge $\gamma13$. Die dritte Lückenlänge $\beta13$ beträgt ein drittes Vielfaches v der ersten Periodenlänge $\lambda1$. Zudem beträgt die vierte Lückenlänge $\gamma13$ ein viertes Vielfaches w, im vorgestellten Ausführungsbeispiel nehmen v und w jeweils den Wert 8 an. Grundsätzlich können für v und w Natürliche Zahlen größer Null eingesetzt werden. Es gilt:

$$\beta13 = v \cdot \lambda1$$

$$\gamma13 = w \cdot \lambda1$$

$$\text{hier: } v = w,$$

$$\text{mit } v, w \in \mathbb{N}$$

Außerdem gilt im vorgestellten Ausführungsbeispiel, dass v und w eine gerade Zahl sind. Für die Bildung eines absoluten Winkelmesswertes ist es grundsätzlich vorteilhaft, wenn die Summe aus der ersten Bogenlänge $\alpha1$, der dritten Bogenlänge $\alpha3$, der dritten Lückenlänge $\beta13$ und der vierten Lückenlänge $\gamma13$ ein geradzahliges Vielfaches der ersten Periodenlänge $\lambda1$ beträgt, beziehungsweise der erste Teiler S (hier 32) eine gerade Zahl ist.

$$\alpha1 + \alpha3 + \beta13 + \gamma13 = (2 \cdot k) \cdot \lambda2$$

oder

$$s + t + v + w = 2 \cdot k, \text{ hier}$$

$$8 + 8 + 8 + 8 = 32 \ (= 2 \cdot 16)$$

$$\text{mit } k \in \mathbb{N}$$

Die dritte Lücke G13 und die vierte Lücke L13 erstrecken sich über ein Vielfaches der ersten Periodenlänge $\lambda1$. Zudem sind die dritte Lücke G13 und die vierte Lücke L13 gleich groß, so dass sich also die dritte Lücke G13 über 90° oder acht erste Periodenlängen $\lambda1$ erstreckt und die vierte Lücke L13 ebenfalls über 90°.

Der Verlauf der zweiten Empfängerleiterbahnen 1.1221 weist entlang der Umfangsrichtung x jeweils unterschiedliche Amplituden j2a, J2b auf. Es liegen also jeweils im Bereich der maximalen Auslenkung unterschiedliche Abstände zwischen der zweiten Kreislinie K2 und der sinusartig verlaufenden zweiten Empfängerleiterbahn 1.1221 vor. Insbesondere weist der Verlauf der zweiten Empfängerleiterbahnen 1.1221 innerhalb eines ersten Abschnittes 2a die erste Amplitude j2a auf, wobei sich der erste Abschnitt 2a ausgehend von dem an die erste Lücke G24 angrenzenden Ende der zweiten Empfängerleiterbahn 1.1221 über einen ersten Winkel $\alpha2a$ erstreckt. Innerhalb eines zweiten Abschnittes 2b weist der Verlauf der zweiten Empfängerleiterbahnen 1.1221 eine zweite Amplitude J2b auf, wobei sich der zweite Abschnitt 2b ausgehend von dem an der zweiten Lücke L24 angrenzenden anderen Ende der zweiten Empfängerleiterbahn 1.1221 über einen zweiten Winkel $\alpha2b$ erstreckt. Dabei sind der erste und der zweite Winkel $\alpha2a$, $\alpha2b$ jeweils kleiner oder gleich der halben zweiten Bogenlänge $\alpha2$. Die erste Amplitude j2a ist kleiner als die zweite Amplitude J2b.

Eine analoge Betrachtung ist auch für die vierten Empfängerleiterbahnen 1.1421 gültig. Demnach weist der Verlauf der vierten Empfängerleiterbahnen 1.1421 entlang der Umfangsrichtung x jeweils unterschiedliche Amplituden j4a, J4b auf. Es liegen also jeweils im Bereich der maximalen Auslenkung unterschiedliche Abstände zwischen der zweiten Kreislinie K2 und der sinusartig verlaufenden vierten Empfängerleiterbahnen 1.1421 vor. Insbesondere weist der Verlauf der vierten Empfängerleiterbahnen 1.1421 innerhalb eines dritten Abschnittes 4a die dritte Amplitude j4a auf, wobei sich der dritte Abschnitt 4a ausgehend von dem an die erste Lücke G24 angrenzenden Ende der vierten Empfängerleiterbahn 1.1421 über einen ersten Winkel $\alpha4a$ erstreckt. Innerhalb eines vierten Abschnittes 4b weist der Verlauf der vierten Empfängerleiterbahnen 1.1421 eine vierte Amplitude J4b auf, wobei sich der vierte Abschnitt 4b ausgehend von dem an der zweiten Lücke L24 angrenzenden anderen Ende der vierten Empfängerleiterbahn 1.1421 über einen vierten Winkel $\alpha4b$ erstreckt. Dabei sind der erste und der vierte Winkel $\alpha4a$, $\alpha4b$ jeweils kleiner oder gleich der halben vierten Bogenlänge $\alpha4$ und die dritte Amplitude j4a ist kleiner als die vierte Amplitude J4b. Demnach gilt im

vorgestellten Ausführungsbeispiel:

$$j2a = j4a$$

$$J2b = J4b$$

Im vorgestellten Ausführungsbeispiel weisen die zweiten und die vierten Empfängerleiterbahnen 1.1221, 1.1421 nicht nur zwei unterschiedliche Amplituden j4a, J4b auf. In den Bereichen zwischen den beiden genannten Amplituden j4a, J4b befinden sich innerhalb jeweils einer zweiten Periodenlänge λ2 Amplituden, die eine Zwischengröße aufweisen, also kleiner sind als die zweite Amplitude J2b beziehungsweise vierte Amplitude J4b und größer sind als die erste Amplitude j2a beziehungsweise dritte Amplitude j4a.

Im vorgestellten Ausführungsbeispiel ist die zwischen den zweiten Empfängerleiterbahnen 1.1221 aufgespannte Fläche, also die Summe der Einzelflächen zwischen den sinusförmigen zweiten Empfängerleiterbahnen 1.1221 (Summe aller linsenförmigen Teilflächen), ähnlich oder gleich groß wie die von den vierten Empfängerleiterbahnen 1.1421 aufgespannte Fläche.

Die Empfängerleiterbahnen 1.1121, 1.1221, 1.1321, 1.1421 sind elektrisch so verschaltet, dass diese zum einen 0° und 90°-Signale liefern und zum anderen 45° und 135°-Signale. Aus den 0° und 90°-Signalen kann ein erstes Positionssignal bestimmt werden und aus den 45° und 135°-Signalen kann ein bezüglich des ersten Positionssignals redundantes zweites Positionssignal bestimmt werden. Zudem sind die ersten Empfängerleiterbahnen 1.1121 der ersten Empfängerspur 1.112 und die dritten Empfängerleiterbahnen 1.1321 der dritten Empfängerspur 1.132 analog seriell miteinander verschaltet. Ebenso sind die zweiten Empfängerleiterbahnen 1.1221 der zweiten Empfängerspur 1.122 und die vierten Empfängerleiterbahnen 1.1421 der vierten Empfängerspur 1.142 analog seriell miteinander verschaltet. Die Auswertung der von den miteinander verschalteten Empfängerleiterbahnen 1.1121, 1.1221, 1.1321, 1.1421 erzeugten Signale erfolgt über einen gemeinsamen Auswerte-ASIC, so dass auf diese Weise eine absolute Position errechnet wird.

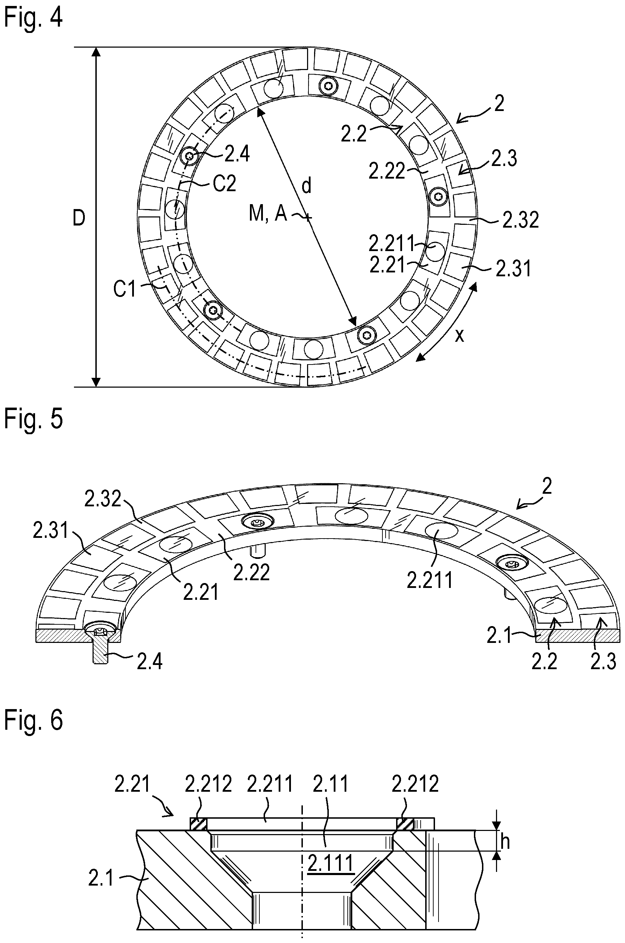

In der Figur 4 ist das Skalenelement 2 in einer Draufsicht gezeigt. Das Skalenelement 2 weist eine ringförmige beziehungsweise kreisringförmige Gestalt auf mit einem Innendurchmesser d und einem Außendurchmesser D. Im vorgestellten Ausführungsbeispiel ist der Innendurchmesser d verhältnismäßig groß, so dass hier gilt: D/d = 1,4.

Das Skalenelement 2 besteht aus einem Substrat 2.1 (Figur 5), welches im dargestellten Ausführungsbeispiel aus Leiterplattenmaterial, also aus Kunststoff, insbesondere aus Epoxidharz hergestellt ist und auf dem zwei Teilungsspuren 2.2, 2.3 angeordnet sind. Die Teilungsspuren 2.2, 2.3 sind ringförmig ausgebildet und bezüglich der Achse A konzentrisch mit unterschiedlichen Radien auf dem Substrat 2.1 angeordnet, so dass die erste Teilungsspur 2.2 entlang der zweiten Teilungskreislinie C2 verläuft und die zweite Teilungsspur 2.3 entlang der ersten Teilungskreislinie C1 verläuft. Die Teilungsspuren 2.2, 2.3 umfassen Teilungsstrukturen bestehend aus jeweils einer periodischen Abfolge von entlang der Umfangsrichtung x alternierend angeordneten elektrisch leitfähigen Teilungsbereichen 2.21, 2.31 und nichtleitfähigen Teilungsbereichen 2.22, 2.32, wobei die elektrisch leitfähigen Teilungsbereiche 2.21, 2.31, jeweils aus einer Schicht aus elektrisch leitfähigem Material gebildet sind. Die Dicke dieser Schicht beträgt hier 18 μm. Als Material für die elektrisch leitfähigen Teilungsbereiche 2.21, 2.31 wurde im gezeigten Beispiel Kupfer auf das Substrat 2.1 aufgebracht. In den nichtleitfähigen Teilungsbereichen 2.22, 2.32 ist das Substrat 2.1 dagegen nicht beschichtet. Durch die Anordnung mit jeweils zwei Teilungsspuren 2.2, 2.3 kann die Winkelstellung des Skalenelements 2 absolut bestimmt werden. Die äußere Teilungsspur 2.3 des Skalenelements 2 weist die größere Anzahl von jeweiligen Teilungsbereichen 2.31, 2.32 entlang der Umfangsrichtung x auf, so dass durch diese die größere Auflösung bezüglich der Messung der Winkelstellung erzielbar ist. Im vorgestellten Ausführungsbeispiel weist die zweite (äußere) Teilungsspur 2.3 ein geradzahliges Vielfaches der ersten Periodenlänge λ1 auf, nämlich 32, entsprechend der Summe s + t + v + w, die für die Auslegung der Geometrie der ersten und dritten Empfängerleiterbahnen 1.1121, 1.1321 zugrunde gelegt worden ist. Dagegen weist die erste (innere) Teilungsspur 2.2 die kleinere Anzahl von jeweiligen Teilungsbereichen 2.31, 2.32 entlang der Umfangsrichtung x auf, hier 15. Dies entspricht der Summe p + q + m + n, die für die Auslegung der zweiten Empfängerleiterbahnen 1.1221 und vierten Empfängerleiterbahnen 1.1421 maßgeblich ist.

Die elektrisch leitfähigen Teilungsbereiche 2.21 der ersten (inneren) Teilungsspur 2.2 weisen jeweils eine Öffnung 2.211 auf, so dass also die Schicht aus elektrisch leitendem Material an dieser Stelle geöffnet ist beziehungsweise das Substrat 2.1 in diesem Bereich nicht beschichtet ist. Die elektrisch leitfähigen Teilungsbereiche 2.21 sind so ausgestaltet beziehungsweise angeordnet, dass jeweils die Öffnung 2.211 von dem elektrisch leitfähigen Teilungsbereich 2.21 umschlossen ist. Die Öffnungen 2.211 sind so angeordnet, dass diese jeweils den gleichen Abstand zum Mittelpunkt M aufweisen, und entlang der zweiten Teilungskreislinie C2 in Umfangsrichtung x äquidistant (hier in einem Abstand von jeweils 24°) angeordnet sind. Das elektrisch leitfähige Material umschließt die Öffnung 2.211, so dass sich beidseitig um die Öffnung 2.211 herum Stege 2.212 (siehe Figur 6) aus elektrisch leitfähigem Material befinden und um die Öffnung 2.211 herum eine geschlossene Kontur aus elektrisch leitfähigem Material vorliegt.

In einer Teilanzahl, hier fünf, der elektrisch leitfähigen Teilungsbereiche 2.21 sind jeweils durch eine Öffnung 2.211 hindurch Bohrungen 2.11 im Substrat 2.1 angeordnet. Die Bohrungen 2.11 sind also entlang der ersten (inneren) Teilungsspur 2.2 beziehungsweise entlang der zweiten Teilungskreislinie C2 im Substrat 2.1 angeordnet, im vorgestellten Ausführungsbeispiel sind fünf Bohrungen 2.11 vorgesehen, die jeweils den gleichen Abstand zum Mittelpunkt M aufweisen und entlang der zweiten Teilungskreislinie C2 äquidistant (hier in einem Abstand von 72°) angeordnet sind.

In der Figur 6 ist ein Detailschnitt durch einen Teil des Skalenelementes 2 im Bereich der ersten Teilungsspur 2.2 gezeigt, wobei in der Figur 6 die Dicke der Schicht aus elektrisch leitendem Material des elektrisch leitfähigen Teilungsbereichs 2.21 zur Erläuterung übertrieben groß dargestellt ist. Die Bohrung 2.11 ist hier jeweils als eine abgesetzte Durchgangsbohrung ausgestaltet. Insbesondere weist die Bohrung 2.11 einen konischen Bereich 2.111 auf, der beispielsweise durch eine Senkbearbeitung hergestellt wird. Der konische Bereich 2.111 ist bezüglich der Oberfläche des Substrats 2.1 beziehungsweise in axialer Richtung um ein Maß h zurückversetzt angeordnet. Dadurch kann in der jeweiligen Bohrung 2.11 ein Befestigungselement 2.4 angeordnet werden, das hier jeweils als eine Schraube (insbesondere Senkkopfschraube) ausgebildet ist, wobei das Befestigungselement 2.4 bezüglich der Oberfläche des Substrats 2.1 und bezüglich der Oberfläche des jeweiligen elektrisch leitfähigen Teilungsbereichs 2.21 zurückversetzt ist. Das Befestigungselement 2.4 dient zur Befestigung des Skalenelements 2 an einem Maschinenteil und ist hier aus Stahl gefertigt und demnach elektrisch leitend.

Im zusammengebauten Zustand stehen sich das Abtastelement 1 und das Skalenelement 2 mit axialem Abstand beziehungsweise Luftspalt gegenüber, so dass bei einer Relativdrehung zwischen dem Skalenelement 2 und dem Abtastelement 1 in den Empfängerleiterbahnen 1.1121, 1.1221, 1.1321, 1.1421 jeweils ein von der jeweiligen Winkelposition abhängiges Signal durch Induktionseffekte erzeugbar ist. Voraussetzung für die Bildung von entsprechenden Signalen ist, dass die Erregerspuren 1.111, 1.121, 1.131, 1.141 ein zeitlich wechselndes elektromagnetisches Erregerfeld im Bereich der jeweilig abgetasteten Teilungsstrukturen erzeugen. Im dargestellten Ausführungsbeispiel sind die Erregerspuren 1.111, 1.121, 1.131, 1.141 als mehrere planarparallele stromdurchflossene Einzel-Leiterbahnen ausgebildet. Das Abtastelement 1 weist eine elektronische Schaltung mit den elektronischen Bauteilen 1.2 auf, die miteinander elektrisch verbunden sind. Die elektronische Schaltung kann beispielsweise auch einen ASIC-Baustein umfassen. Die Signale, die von den Empfängerspuren 1.112, 1.122, 1.132, 1.142 erzeugt werden, werden mit Hilfe von einigen der elektronischen Bauteile 1.2, die eine Auswerteschaltung bilden, weiterverarbeitet. Diese elektronische Schaltung des Abtastelements 1 arbeitet nicht nur als Auswerteelement, sondern auch als Erregerkontrollelement, unter dessen Kontrolle der Erregerstrom generiert beziehungsweise erzeugt wird, welcher dann durch die Erregerspuren 1.111, 1.121, 1.131, 1.141 fließt. Somit werden die Erregerspuren 1.111, 1.121, 1.131, 1.141 durch ein und dasselbe Erregerkontrollelement bestromt.

Werden die Erregerspuren 1.111, 1.121, 1.131, 1.141 bestromt, so bildet sich um die Erregerspuren 1.111, 1.121, 1.131, 1.141 ein schlauch- bzw. zylinderförmig orientiertes elektromagnetisches Feld aus. Die Feldlinien des resultierenden elektromagnetischen Feldes verlaufen um die Erregerspuren 1.111, 1.121, 1.131, 1.141, wobei die Richtung der Feldlinien in bekannter Art und Weise von der Stromrichtung in den Erregerspuren 1.111, 1.121, 1.131, 1.141 abhängt. Im Bereich der elektrisch leitfähigen Teilungsbereiche 2.21, 2.31 werden Wirbelströme induziert, so dass jeweils eine von der Winkelstellung abhängige Modulation des Feldes erreicht wird. Entsprechend kann durch die Empfängerspuren 1.112, 1.122, 1.132, 1.142 jeweils die relative Winkelstellung gemessen werden. Die spezielle Ausgestaltung der ersten elektrisch leitfähigen Teilungsbereiche 2.21, insbesondere die Positionierung und Dimensionierung der Öffnungen 2.211 stellt eine geeignete Ausbildung der Wirbelströme sicher, die um die Öffnung 2.211 über 360° herum insbesondere in den Stegen 2.212 aus elektrisch leitfähigem Material fließen können. Durch die Erfindung kann also eine vergleichsweise kompakte Bauweise des Skalenelementes 2 erreicht werden, ohne dass die Messgenauigkeit merklich reduziert wird. Denn obwohl die Befestigungselemente 2.4 in der ersten Teilungsspur 2.2 integriert sind, beeinträchtigen diese nicht das Messergebnis. Insbesondere ist es in diesem Zusammenhang auch von Vorteil, dass diejenigen elektrisch leitfähigen Teilungsbereiche 2.21, die keine Bohrung aufweisen die gleiche Öffnung 2.211 aufweisen, wie die Teilungsbereiche 2.21 mit den Bohrungen 2.11 und mit den Befestigungselementen 2.4. Zudem ist es auch vorteilhaft, dass die Befestigungselemente 2.4 in axialer Richtung zurückversetzt sind.

## Patentansprüche

1.  Skalenelement (2) für eine induktive Positionsmesseinrichtung, welches ein Substrat (2.1) aufweist, auf dem eine Teilungsspur (2.2) angeordnet ist, wobei

    die Teilungsspur (2.2) entlang einer Messrichtung (x) aus einer periodischen Abfolge von alternierend angeordneten elektrisch leitfähigen Teilungsbereichen (2.21) und nichtleitfähigen Teilungsbereichen (2.22) gebildet ist, wobei die elektrisch leitfähigen Teilungsbereiche (2.21), jeweils aus einer Schicht aus elektrisch leitfähigem Material gebildet sind,
    im Substrat (2.1) zumindest eine Bohrung (2.11) angeordnet ist zur Befestigung des Skalenelements (2) an einem Maschinenteil,
**dadurch gekennzeichnet, dass**

die elektrisch leitfähigen Teilungsbereiche (2.21) jeweils eine Öffnung (2.211) aufweisen, wobei das elektrisch leitfähige Material die Öffnung (2.211) umschließt, wobei zumindest in einem der elektrisch leitfähigen Teilungsbereiche (2.21) durch die Öffnung (2.211) hindurch die zumindest eine Bohrung (2.11) im Substrat (2.1) angeordnet ist.

2.  Skalenelement (2) gemäß dem Anspruch 1, wobei die Teilungsspur (2.2) ringförmig ausgebildet ist.

3.  Skalenelement (2) gemäß einem der vorhergehenden Ansprüche, wobei die Öffnungen (2.211) in den elektrisch leitfähigen Teilungsbereichen (2.21) geometrisch gleich ausgestaltet sind.

4.  Skalenelement (2) gemäß einem der vorhergehenden Ansprüche, wobei die Teilungsspur (2.2) ringförmig ausgebildet ist und sich entlang einer Teilungskreislinie (C2) mit dem Mittelpunkt (M) erstreckt, wobei die Öffnungen (2.211) so angeordnet sind, dass diese jeweils den gleichen Abstand zum Mittelpunkt (M) aufweisen, und entlang der Teilungskreislinie (C2) äquidistant angeordnet sind.

5.  Skalenelement (2) gemäß einem der vorhergehenden Ansprüche, wobei die Teilungsspur (2.2) ringförmig ausgebildet ist und sich entlang einer Teilungskreislinie (C2) mit dem Mittelpunkt (M) erstreckt, wobei das Skalenelement (2) mehrere der elektrisch leitfähigen Teilungsbereiche (2.21) umfasst, welche Bohrungen (2.11) aufweisen, wobei die Bohrungen (2.11) so angeordnet sind, dass diese jeweils den gleichen Abstand zum Mittelpunkt (M) aufweisen, und entlang der Teilungskreislinie (C2) äquidistant angeordnet sind.

6.  Skalenelement (2) gemäß einem der vorhergehenden Ansprüche, wobei das ringförmig ausgestaltete Skalenelement (2) einen Innendurchmesser d und einen Außendurchmesser D aufweist, wobei gilt D/d < 3.

7.  Skalenelement (2) gemäß einem der vorhergehenden Ansprüche, wobei das Skalenelement (2) zumindest ein Befestigungselement (2.4) umfasst, das in der Bohrung (2.11) angeordnet ist.

8.  Skalenelement (2) gemäß dem Anspruch 7, wobei das Befestigungselement (2.4) bündig oder zurückgesetzt bezüglich der elektrisch leitfähigen Teilungsbereiche (2.21) angeordnet ist.

9.  Skalenelement (2) gemäß den Ansprüchen 7 oder 8, wobei das Befestigungselement (2.4) als eine Schraube ausgestaltet ist.

10. Skalenelement (2) gemäß den Ansprüchen 7, 8 oder 9, wobei das Befestigungselement (2.4) aus elektrisch leitfähigem Material ist.

11. Skalenelement (2) gemäß einem der vorhergehenden Ansprüche, wobei das Skalenelement (2) mehrere Befestigungselemente (2.4) umfasst, wobei das Skalenelement (2) mehrere der elektrisch leitfähigen Teilungsbereiche (2.21) umfasst, welche Bohrungen (2.11) aufweisen, in denen die Befestigungselemente (2.4) angeordnet sind.

**Claims**

1.  Scale element (2) for an inductive position measuring device, which element has a substrate (2.1) on which a graduation track (2.2) is arranged, wherein

the graduation track (2.2) is formed by a periodic sequence of alternately arranged electrically conductive graduation regions (2.21) and electrically nonconductive graduation regions (2.22) along a measuring direction (x), wherein the electrically conductive graduation regions (2.21) are each formed by a layer of electrically conductive material,
at least one bore (2.11) is arranged in the substrate (2.1) for fastening the scale element (2) to a machine part,
**characterized in that**
the electrically conductive graduation regions (2.21) each have an opening (2.211), wherein the electrically conductive material encloses the opening (2.211), wherein at least in one of the electrically conductive graduation regions (2.21), the at least one bore (2.11) is arranged in the substrate (2.1) through the opening (2.211).

**2.** Scale element (2) according to Claim 1, wherein the graduation track (2.2) is ring-shaped.

**3.** Scale element (2) according to one of the preceding claims, wherein the openings (2.211) in the electrically conductive graduation regions (2.21) are geometrically identical.

**4.** Scale element (2) according to one of the preceding claims, wherein the graduation track (2.2) is ring-shaped and extends along a graduation circle line (C2) having a centre point (M), wherein the openings (2.211) are arranged such that they are each at the same distance from the centre point (M) and are arranged equidistantly along the graduation circle line (C2).

**5.** Scale element (2) according to one of the preceding claims, wherein the graduation track (2.2) is ring-shaped and extends along a graduation circle line (C2) having a centre point (M), wherein the scale element (2) has a plurality of the electrically conductive graduation regions (2.21) which have bores (2.11), wherein the bores (2.11) are arranged such that they are each at the same distance from the centre point (M) and are arranged equidistantly along the graduation circle line (C2).

**6.** Scale element (2) according to one of the preceding claims, wherein the ring-shaped scale element (2) has an inner diameter d and an outer diameter D, where D/d < 3.

**7.** Scale element (2) according to one of the preceding claims, wherein the scale element (2) comprises at least one fastening element (2.4), which is arranged in the bore (2.11).

**8.** Scale element (2) according to Claim 7, wherein the fastening element (2.4) is arranged flush or set back with respect to the electrically conductive graduation regions (2.21).

**9.** Scale element (2) according to Claim 7 or 8, wherein the fastening element (2.4) is designed as a screw.

**10.** Scale element (2) according to Claim 7, 8 or 9, wherein the fastening element (2.4) is made of electrically conductive material.

**11.** Scale element (2) according to one of the preceding claims, wherein the scale element (2) has a plurality of fastening elements (2.4), wherein the scale element (2) comprises a plurality of the electrically conductive graduation regions (2.21), which have bores (2.11) in which the fastening elements (2.4) are arranged.

**Revendications**

**1.** Élément d'échelle (2) pour un dispositif inductif de mesure de position, qui comporte un substrat (2.1) sur lequel est disposée une piste de graduation (2.2), dans lequel

la piste de graduation (2.2) est formée dans une direction de mesure (x) par une séquence périodique de zones de graduation électriquement conductrices (2.21) et de zones de graduation non conductrices (2.22) disposées en alternance, les zones de graduation électriquement conductrices (2.21) étant respectivement constituées d'une couche de matériau électriquement conducteur,
au moins un alésage (2.11) est disposé dans le substrat (2.1) pour fixer l'élément d'échelle (2) sur une pièce de machine,
**caractérisé en ce que**
les zones de graduation électriquement conductrices (2.21) présentent respectivement une ouverture (2.211), le matériau électriquement conducteur entourant l'ouverture (2.211), dans lequel
ledit au moins un alésage (2.11) est disposé dans le substrat (2.1) à travers l'ouverture (2.211) dans au moins l'une des zones de graduation électriquement conductrices (2.21).

**2.** Élément d'échelle (2) selon la revendication 1, dans lequel la piste de graduation (2.2) est réalisée sous forme annulaire.

**3.** Élément d'échelle (2) selon l'une quelconque des revendications précédentes, dans lequel les ouvertures (2.211) réalisées dans les zones de graduation électriquement conductrices (2.21) sont configurées de manière géométriquement identique.

4. Élément d'échelle (2) selon l'une quelconque des revendications précédentes, dans lequel la piste de graduation (2.2) est réalisée sous forme annulaire et s'étend le long d'une ligne circulaire de graduation (C2) de centre (M), les ouvertures (2.211) étant disposées de telle sorte qu'elles présentent respectivement la même distance par rapport au centre (M) et qu'elles soient disposées à égale distance le long de la ligne circulaire de graduation (C2).

5. Élément d'échelle (2) selon l'une quelconque des revendications précédentes, dans lequel la piste de graduation (2.2) est réalisée sous forme annulaire et s'étend le long d'une ligne circulaire de graduation (C2) de centre (M), l'élément d'échelle (2) comprenant plusieurs des zones de graduation électriquement conductrices (2.21), qui présentent des alésages (2.11), les alésages (2.11) étant disposés de manière à ce qu'ils présentent respectivement la même distance par rapport au centre (M) et qu'ils soient disposés de manière équidistante le long de la ligne circulaire de graduation (C2).

6. Élément d'échelle (2) selon l'une quelconque des revendications précédentes, dans lequel l'élément d'échelle (2) configuré sous forme annulaire présente un diamètre intérieur d et un diamètre extérieur D, avec D/d < 3.

7. Élément d'échelle (2) selon l'une quelconque des revendications précédentes, dans lequel l'élément d'échelle (2) comprend au moins un élément de fixation (2.4) qui est disposé dans l'alésage (2.11).

8. Élément d'échelle (2) selon la revendication 7, dans lequel l'élément de fixation (2.4) est disposé de manière affleurante ou en retrait par rapport aux zones de graduation électriquement conductrices (2.21).

9. Élément d'échelle (2) selon les revendications 7 ou 8, dans lequel l'élément de fixation (2.4) est réalisé sous la forme d'une vis.

10. Élément d'échelle (2) selon les revendications 7, 8 ou 9, dans lequel l'élément de fixation (2.4) est constitué d'un matériau électriquement conducteur.

11. Élément d'échelle (2) selon l'une quelconque des revendications précédentes, dans lequel l'élément d'échelle (2) comprend plusieurs éléments de fixation (2.4), l'élément d'échelle (2) comprenant plusieurs des zones de graduation électriquement conductrices (2.21), qui présentent des alésages (2.11) dans lesquels sont disposés les éléments de fixation (2.4).

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3929539 A1

- DE 102018213400 A1